# EUROPEAN PATENT APPLICATION

(11) **EP 4 262 270 A1**
(43) Date of publication of application: **18.10.2023**
(21) Application number: 22739627.2
(22) Date of filing: 11.01.2022
(51) Int. Cl.: H04W 28/02, H04W 76/11, H04W 76/15, H04W 74/08, H04W 84/12

(54) **METHOD AND DEVICE FOR RECEIVING DOWNLINK TRAFFIC IN COMMUNICATION SYSTEM SUPPORTING MULTIPLE LINKS**

(30) Priority: 14.01.2021 KR 20210005126
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2022/000476
(87) International publication number: WO 2022/154432

(57) **Abstract**

A method and a device for receiving downlink traffic in a communication system supporting multiple links are disclosed. An operation method of a first device comprises the steps of: transmitting TIM through a first link from among multiple links; transmitting, through the first link, first information for indicating one or more links through which a data unit stored in the first device is transmitted; and using the one or more links indicated by the first information, so as to transmit the data unit to a second device indicated by the TIM.

## Description

### [Technical Field]

The present disclosure relates to a wireless local area network (LAN) communication technique, and more particularly, to a technique for downlink traffic reception in a device supporting low-power operations.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). As the above-described wireless LAN technologies have been developed and spread, applications using the wireless LAN technologies have been diversified, and a demand for a wireless LAN technology supporting a higher throughput has arisen. Accordingly, a frequency bandwidth (e.g., 'maximum 160 MHz bandwidth' or `80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since multi-link operations are operations not defined in the existing wireless LAN standard, it may be necessary to define detailed operations according to an environment in which the multi-link operations are performed. In particular, in order to transmit data through multiple links, methods for channel access in each link and methods for transmitting and receiving data in a device supporting low-power operations will be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for transmitting and receiving data in a device supporting low-power operations.

### [Technical Solution]

An operation method of a first device, according to a first embodiment of the present disclosure for achieving the above-described objective, may comprise: transmitting a traffic indication map (TIM) through a first link among the multiple links; transmitting first information through the first link, the first information indicating one or more links through which a data unit stored in the first device is transmitted; and transmitting the data unit to a second device indicated by the TIM using the one or more links indicated by the first information.

The first information may include a traffic identifier (TID) mapped to the one or more links.

The operation method may further comprise: receiving a power saving (PS)-Poll frame from the second device through the one or more links indicated by the first information, wherein the data unit may be transmitted when the PS-Poll frame is received from the second device.

The PS-Poll frame may be received after a first time from a time of transmitting the first information, and the first time may be set to prevent collision between frames.

The first time may be set to a time longer than a time required for link state transition in the second device.

The operation method may further comprise: transmitting a trigger frame to the second device through the one or more links indicated by the first information; and receiving a PS-Poll frame as a response to the trigger frame from the second device, wherein the data unit is transmitted when the PS-Poll frame is received from the second device.

The TIM may be transmitted through a beacon frame, and the first information may be transmitted through a broadcast frame or a unicast frame.

An operation method of a second device, according to a second embodiment of the present disclosure for achieving the above-described objective, may comprise: receiving a traffic indication map (TIM) from a first device through a first link among the multiple links; receiving first information from the first device through the first link, the first information indicating one or more links through which a data unit stored in the first device is transmitted; and in response to the TIM indicating that the data unit to be transmitted to the second device exists, receiving the data unit from the first device through the one or more links indicated by the first information.

The first information may include a traffic identifier (TID) mapped to the one or more links.

The operation method may further comprise: transmitting a power saving (PS)-Poll frame to the first device through the one or more links indicated by the first information, wherein the data unit may be received after transmitting the PS-Poll frame.

The PS-Poll frame may be transmitted after a first time from a time of receiving the first information, and the first time may be set to prevent collision between frames.

The first time may be set to a time longer than a time required for link state transition in the second device.

The operation method may further comprise: receiving a trigger frame from the first device through the one or more links indicated by the first information; and transmitting a PS-Poll frame as a response to the trigger frame to the first device, wherein the data unit is received after transmitting the PS-Poll frame.

The TIM may be received through a beacon frame, and the first information may be received through a broadcast frame or a unicast frame.

A station (STA) MLD, according to a third embodiment of the present disclosure for achieving the above-described objective, may comprise: a processor; a first STA operating under control of the processor; a second STA operating under control of the processor; and a memory storing one or more instructions executable by the processor, wherein the one or more instructions are executed to: receive, by the first STA, a traffic indication map (TIM) from an access point (AP) MLD through a first link among the multiple links; receive, by the first STA, first information from the AP MLD, the first information indicating a second link through which a data unit stored in the AP MLD is transmitted; and in response to the TIM indicating that the data unit to be transmitted to the STA MLD exists, receive, by the second STA, the data unit from the AP MLD through the second link indicated by the first information among the multiple links.

The first information may include a traffic identifier (TID) mapped to the second link.

The one or more instructions may be further executed to: transmit, by the second STA, a power saving (PS)-Poll frame to the AP MLD through the second link indicated by the first information, wherein the data unit may be received after transmitting the PS-Poll frame.

The PS-Poll frame may be transmitted after a first time from a time of receiving the first information, and the first time may be set to prevent collision between frames. The first time may be set for link state transition.

The one or more instructions may be further executed to: receive, by the second STA, a trigger frame from the AP MLD through the second link indicated by the first information; and transmit, by the second STA, a PS-Poll frame as a response to the trigger frame to the AP MLD, wherein the data unit is received after transmitting the PS-Poll frame.

The TIM may be received through a beacon frame, and the first information may be received through a broadcast frame or a unicast frame.

### [Advantageous Effects]

According to the present disclosure, an AP MLD may transmit a frame including information on a TID and a size of a BU. A STA MLD may identify the TID indicated by the frame received from the AP MLD, and may transition a state of a link mapped to the TID to a normal state. The STA MLD may receive a data frame including the BU from the AP MLD in the link operating in the normal state. Accordingly, the data frame can be quickly transmitted, and the performance of the communication system can be improved.

### [Description of Drawings]

FIG. 1 is a conceptual diagram illustrating a first embodiment of a wireless LAN system.
FIG. 2 is a block diagram illustrating a first embodiment of a communication node constituting a wireless LAN system.
FIG. 3 is a conceptual diagram illustrating a first embodiment of a multi-link configured between multi-link devices (MLDs).
FIG. 4 is a sequence chart illustrating an association procedure of a station in a wireless LAN system.
FIG. 5 is a timing diagram illustrating a first embodiment of an operation method of a communication node based on EDCA.
FIG. 6 is a timing diagram illustrating a first embodiment of a downlink communication method in a wireless LAN system supporting multiple links.
FIG. 7A is a timing diagram illustrating a second embodiment of a downlink communication method in a wireless LAN system supporting multiple links.
FIG. 7B is a timing diagram illustrating a third embodiment of a downlink communication method in a wireless LAN system supporting multiple links.
FIG. 8 is a timing diagram illustrating a fourth embodiment of a downlink communication method in a wireless LAN system supporting multiple links.
FIG. 9 is a timing diagram illustrating a fifth embodiment of a downlink communication method in a wireless LAN system supporting multiple links.
FIG. 10 is a block diagram illustrating a first embodiment of a QoS Null frame or BSR frame.
FIG. 11A is a block diagram illustrating a first embodiment of an A-MPDU including a QoS Null MPDU.
FIG. 11B is a block diagram illustrating a second embodiment of an A-MPDU including a QoS Null MPDU.
FIG. 12 is a block diagram illustrating a first embodiment of a QoS Null frame including a plurality of TIDs.
FIG. 13 is a block diagram illustrating a first embodiment of a multi-TID BA frame.

### [Best mode of the Invention]

Since the present disclosure may be variously modified and have several forms, specific embodiments will be shown in the accompanying drawings and be described in detail in the detailed description. It should be understood, however, that it is not intended to limit the present disclosure to the specific embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which embodiments according to the present disclosure are applied will be described. The wireless communication system to which the embodiments according to the present disclosure are applied is not limited to the contents described below, and the embodiments according to the present disclosure can be applied to various wireless communication systems. A wireless communication system may be referred to as a 'wireless communication network'.

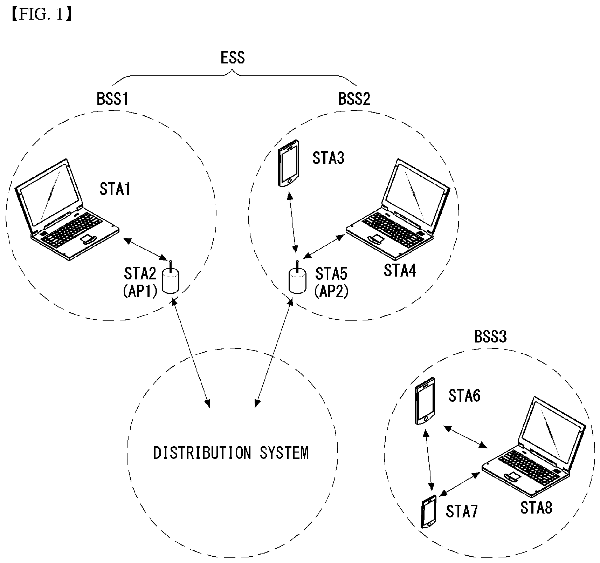

FIG. 1 is a conceptual diagram illustrating a first embodiment of a wireless LAN system.

As shown in FIG. 1, a wireless LAN system may include at least one basic service set (BSS). A BSS may refer to a set of stations (e.g., STA1, STA2 (AP1), STA3, STA4, STA5 (AP2), STA6, STA7, and STA8) that can communicate with each other through successful synchronization, and may not refer to a specific region. In embodiments below, a station performing functions as an access point may be referred to as an 'access point (AP)', and a station not performing functions as an access point may be referred to as a 'non-AP station' or a 'station'.

The BSS may be classified into an infrastructure BSS and an independent BSS (IBSS). Here, a BSS1 and a BSS2 may mean infrastructure BSSs, and a BSS3 may mean an IBSS. The BSS1 may include a first station (STA1), a first access point (STA2 (AP1)) providing a distribution service, and a distribution system (DS) connecting a plurality of access points (STA2 (AP1) and STA5 (AP2)). In the BSS1, the first access point STA2 (AP1) may manage the first station STA1.

The BSS2 may include a third station (STA3), a fourth station (STA4), a second access point (STA5 (AP2)) providing a distribution service, and a DS connecting the plurality of access points (STA2 (AP1) and STA5 (AP2)). In the BSS2, the second access point STA5 (AP2) may manage the third station STA3 and the fourth station STA4.

The BSS3 may mean an IBSS operating in an ad-hoc mode. An access point, which is a centralized management entity, may not exist in the BSS3. In other words, in the BSS3, the stations STA6, STA7, and STA8 may be managed in a distributed manner. In the BSS3, all stations STA6, STA7, and STA8 may refer to mobile stations, and since they are not allowed to access a DS, they may constitute a self-contained network.

The access points STA2 (AP1) and STA5 (AP2) may provide access to the DS for the stations STA1, STA3, and STA4 associated therewith via a wireless medium. In the BSS1 or BSS2, communications between the stations STA1, STA3, and STA4 are generally performed through the access points STA2 (AP1) and STA5 (AP2), but when direct links are established, direct communications between the stations STA1, STA3, and STA4 may be possible.

A plurality of infrastructure BSSs may be interconnected through a DS. The plurality of BSSs connected through the DS may be referred to as an extended service set (ESS). The communication nodes STA1, STA2 (AP1), STA3, STA4, and STA5 (AP2) included in the ESS may communicate with each other, and an arbitrary station (STA1, STA3, or STA4) may move from one BSS to another BSS within the same ESS while communicating without interruption.

The DS may be a mechanism for one access point to communicate with another access point, according to which an access point may transmit frames for stations associated with the BSS it manages, or transmit frames for an arbitrary station that has moved to another BSS. Also, the access point may transmit and receive frames to and from an external network such as a wired network. Such the DS may not necessarily have to be a network, and if it can provide a predetermined distribution service stipulated in the IEEE 802.11 standard, there is no restriction on its form. For example, the DS may be a wireless network such as a mesh network or a physical structure that connects the access points to each other. The communication nodes STA1, STA2 (AP1), STA3, STA4, STA5 (AP2), STA6, STA7, and STA8 included in the wireless LAN system may be configured as follows.

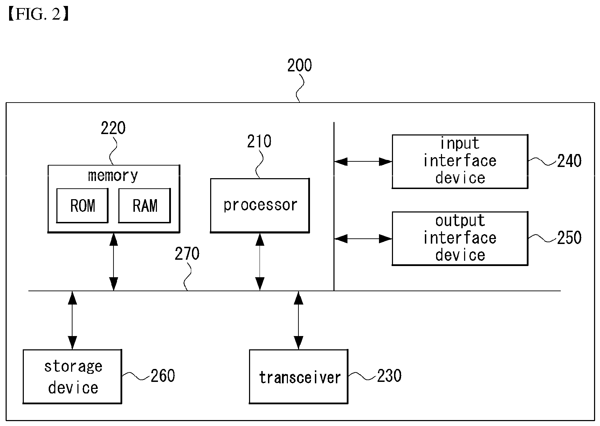

FIG. 2 is a block diagram illustrating a first embodiment of a communication node constituting a wireless LAN system.

As shown in FIG. 2, a communication node 200 may include at least one processor 210, a memory 220, or a transceiver 230 connected to a network to perform communications. The transceiver 230 may be referred to as a transceiver, a radio frequency (RF) unit, an RF module, or the like. In addition, the communication node 200 may further include an input interface device 240, an output interface device 250, a storage device 260, and the like. The respective components included in the communication node 200 may be connected by a bus 270 to communicate with each other.

However, the respective components included in the communication node 200 may be connected through individual interfaces or individual buses centering on the processor 210 instead of the common bus 270. For example, the processor 210 may be connected to at least one of the memory 220, the transceiver 230, the input interface device 240, the output interface device 250, or the storage device 260 through a dedicated interface.

The processor 210 may execute program commands stored in at least one of the memory 220 or the storage device 260. The processor 210 may refer to a central processing unit (CPU), a graphics processing unit (GPU), or a dedicated processor on which the methods according to the embodiments of the present invention are performed. Each of the memory 220 and the storage device 260 may be configured as at least one of a volatile storage medium or a nonvolatile storage medium. For example, the memory 220 may be configured with at least one of a read only memory (ROM) or a random access memory (RAM).

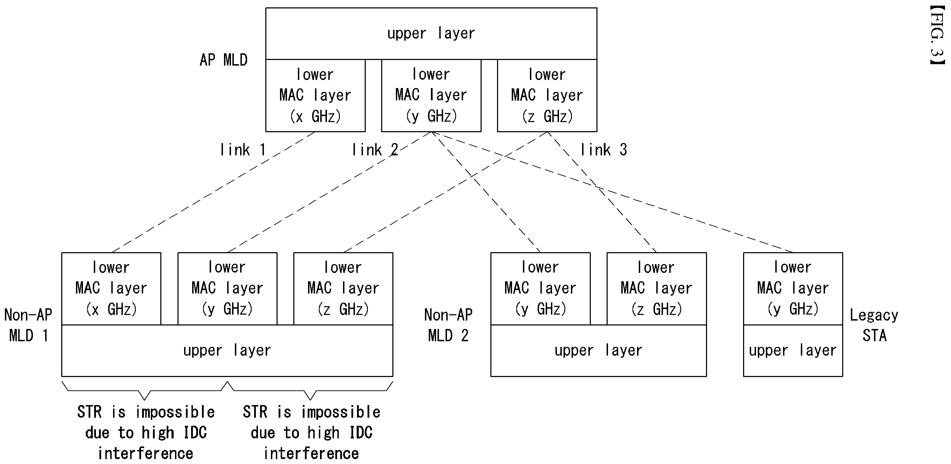

FIG. 3 is a conceptual diagram illustrating a first embodiment of a multi-link configured between multi-link devices (MLDs).

As shown in FIG. 3, an MLD may have one medium access control (MAC) address. In embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 210 shown in FIG. 2). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 210 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

Each of the AP MLD and the STA MLD may have an MLD MAC address, and each of the AP and the STA operating in each link may have a MAC address. The MLD MAC address of the AP MLD may be referred to as an AP MLD MAC address, and the MLD MAC address of the STA MLD may be referred to as a STA MLD MAC address. The MAC address of the AP may be referred to as an AP MAC address, and the MAC address of the STA may be referred to as a STA MAC address. In a multi-link negotiation procedure, the AP MLD MAC address and the STA MLD MAC address may be used. The address of the AP and the address of the STA may be exchanged and/or configured in the multi-link negotiation procedure.

When the multi-link negotiation procedure is completed, the AP MLD may generate an address table and manage and/or update the address table. One AP MLD MAC address may be mapped to one or more AP MAC addresses, and corresponding mapping information may be included in the address table. One STA MLD MAC address may be mapped to one or more STA MAC addresses, and corresponding mapping information may be included in the address table. The AP MLD may identify address information based on the address table. For example, when a STA MLD MAC address is received, the AP MLD may identify one or more STA MAC addresses mapped to the STA MLD MAC address based on the address table.

In addition, the STA MLD may manage and/or update the address table. The address table may include 'mapping information between the AP MLD MAC address and the AP MAC address(es)' and/or 'mapping information between the STA MLD MAC address and the STA MAC address(es)'. The AP MLD may receive a packet from a network, identify an address of a STA MLD included in the packet, identify link(s) supported by the STA MLD, and may identify STA(s) taking charge of the link(s) from the address table. The AP MLD may set STA MAC address(es) of the identified STA(s) as a receiver address(es), and may generate and transmit frame(s) including the receiver address(es).

Meanwhile, an association procedure in a wireless LAN system may be performed as follows.

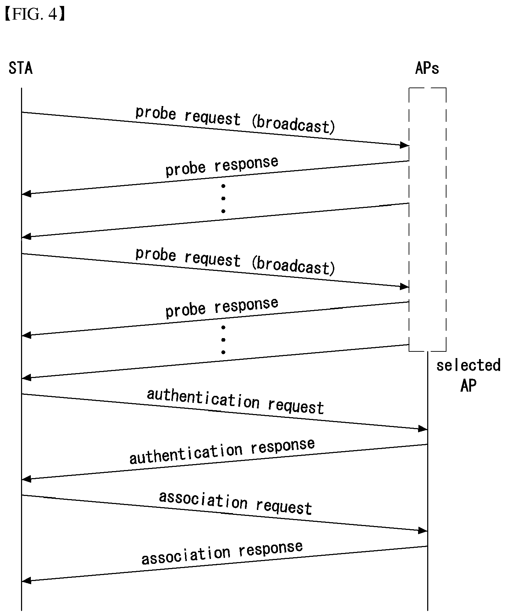

FIG. 4 is a sequence chart illustrating an association procedure of a station in a wireless LAN system.

As shown in FIG. 4, an association procedure of a STA in an infrastructure BSS may generally be divided into a probe step of detecting AP(s), an authentication step with detected AP(s), and an association step with the authenticated AP(s). The STA may be a STA MLD or a STA affiliated with the STA MLD, and the AP may be an AP MLD or an AP affiliated with the AP MLD.

The STA may detect neighboring APs using a passive scanning scheme or an active scanning scheme. When the passive scanning scheme is used, the STA may detect neighboring APs by overhearing beacons transmitted by APs. When the active scanning scheme is used, the STA may transmit a probe request frame, and may detect neighboring APs by receiving probe response frames that are responses to the probe request frame from the APs.

When the neighboring APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In this case, the STA may select one AP among AP(s) with which the STA has performed the authentication step, and perform the association step with the selected AP. In other words, the STA may transmit an association request frame to the selected AP, and may complete the association with the selected AP by receiving an association response frame that is a response to the association request frame from the selected AP.

Meanwhile, communication nodes (e.g., access points, stations, and the like) belonging to the wireless LAN system may perform transmission and reception operations of frames based on a point coordination function (PCF), hybrid coordination function (HCF), HCF controlled channel access (HCCA), distributed coordination function (DCF), enhanced distributed channel access (EDCA), and/or the like.

In the wireless LAN system, frames may be classified into a management frame, a control frame, and a data frame. The management frame may include an association request frame, association response frame, reassociation request frame, reassociation response frame, probe request frame, probe response frame, beacon frame, disassociation frame, authentication frame, deauthentication frame, action frame, and the like.

The control frame may include an acknowledgment (ACK) frame, block ACK request (BAR) frame, block ACK (BA) frame, power saving (PS)-Poll frame, request-to-send (RTS) frame, clear-to-send (CTS) frame, and the like. The data frame may be classified into a quality of service (QoS) data frame and a non-QoS data frame. The QoS data frame may refer to a data frame for which transmission according to a QoS is required, and the non-QoS data frame may indicate a data frame for which transmission according to a QoS is not required.

Meanwhile, in a wireless LAN system, a communication node (e.g., access point or station) may operate based on the EDCA scheme.

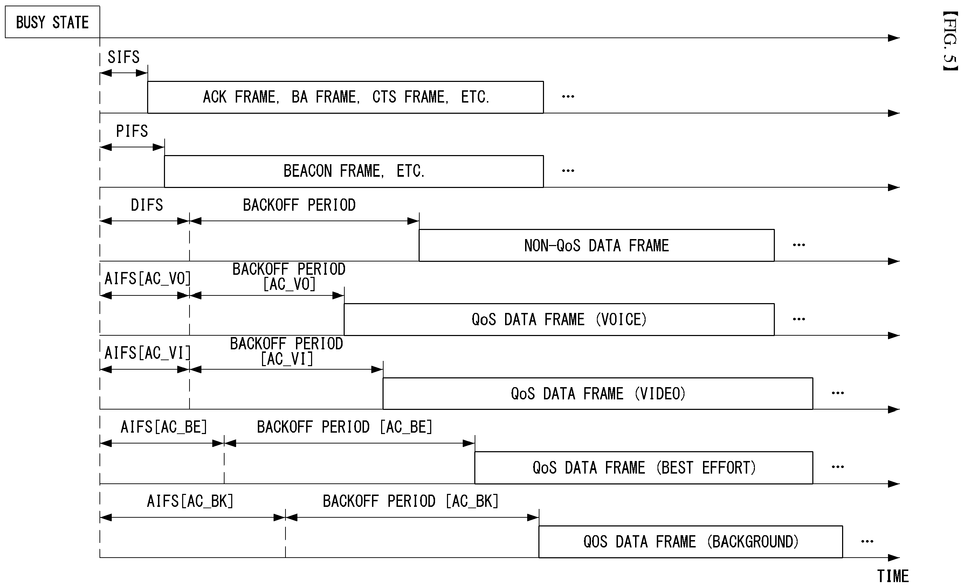

FIG. 5 is a timing diagram illustrating a first embodiment of an operation method of a communication node based on EDCA.

As shown in FIG. 5, a communication node desiring to transmit a control frame (or a management frame) may perform a channel state monitoring operation (e.g., carrier sensing operation) during a predetermined period (e.g., short interframe space (SIFS) or PCF IFS (PIFS)), and when the channel state is determined to be idle during the predetermined period (e.g., SIFS or PIFS), the communication node may transmit the control frame (or the management frame). For example, the communication node may transmit an ACK frame, a BA frame, a CTS frame, or the like when the channel state is determined to be idle during SIFS. Also, the communication node may transmit a beacon frame or the like when the channel state is determined to be idle during the PIFS. On the other hand, when it is determined that the channel state is busy during the predetermined period (e.g., SIFS or PIFS), the communication node may not transmit the control frame (or the management frame). Here, the carrier sensing operation may refer to a clear channel assessment (CCA) operation.

A communication node desiring to transmit a non-QoS data frame may perform a channel state monitoring operation (e.g., carrier sensing operation) during DCF IFS (DIFS), and when the channel state is determined to be idle during the DIFS, the communication node may perform a random backoff procedure. For example, the communication node may select a backoff value (e.g., a backoff counter) within a contention window according to the random backoff procedure and may perform a channel state monitoring operation (e.g., carrier sensing operation) during a period corresponding to the selected backoff value (hereinafter, referred to as 'backoff period'). The communication node may transmit the non-QoS data frame when the channel state is determined to be idle in the backoff period.

A communication node desiring to transmit a QoS data frame may perform a channel state monitoring operation (e.g., carrier sensing operation) during an arbitration IFS (AIFS), and when the channel state is determined to be idle during the AIFS, the communication node may perform a random backoff procedure. The AIFS may be configured according to an access category (AC) of a data unit (e.g., protocol data unit (PDU)) included in the QoS data frame. The AC of the data unit may be as shown in Table 1 below.

**[Table 1]**

| **Priority** | **AC** | **Description** |
|---|---|---|
| Lowest | AC_BK | Background |
| | AC_BE | Best effort |
| | AC_VI | Video |
| Highest | AC_VO | Voice |

AC_BK may indicate background data, AC_BE may indicate data transmitted in the best effort manner, AC_VI may indicate video data, AC_VO may indicate voice data. For example, the length of the AIFS for the QoS data frame corresponding to each of AC_VO and AC_VI may be configured to be equal to the length of the DIFS. The length of the AIFS for the QoS data frame corresponding to each of AC_BE and AC_BK may be configured to be longer than the length of the DIFS. Here, the length of the AIFS for the QoS data frame corresponding to AC_BK may be configured to be longer than the length of the AIFS for the QoS data frame corresponding to AC_BE.

In the random backoff procedure, the communication node may select a backoff value (e.g., a backoff counter) within a contention window according to the AC of the QoS data frame. The contention window according to the AC may be as shown in Table 2 below. CWₘᵢₙ may indicate a minimum value of the contention window, CWₘₐₓ may indicate a maximum value of the contention window, and each of the minimum value and the maximum value of the contention window may be represented by the number of slots.

**[Table 2]**

| **AC** | **CWₘᵢₙ** | **CWₘₐₓ** |
|---|---|---|
| AC_BK | 31 | 1023 |
| AC_BE | 31 | 1023 |
| AC_VI | 15 | 31 |
| AC_VO | 7 | 15 |

The communication node may perform a channel state monitoring operation (e.g., carrier sensing operation) in the backoff period and may transmit the QoS data frame when the channel state is determined to be idle in the backoff period.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. In other words, when an operation of a STA is described, an AP corresponding thereto may perform an operation corresponding to the operation of the STA. Conversely, when an operation of an AP is described, a STA corresponding thereto may perform an operation corresponding to the operation of the AP.

In the following, a wireless communication network to which embodiments according to the present disclosure are applied will be described. The wireless communication network to which embodiments according to the present disclosure are applied is not limited to the content described below, and embodiments according to the present disclosure may be applied to various wireless communication networks.

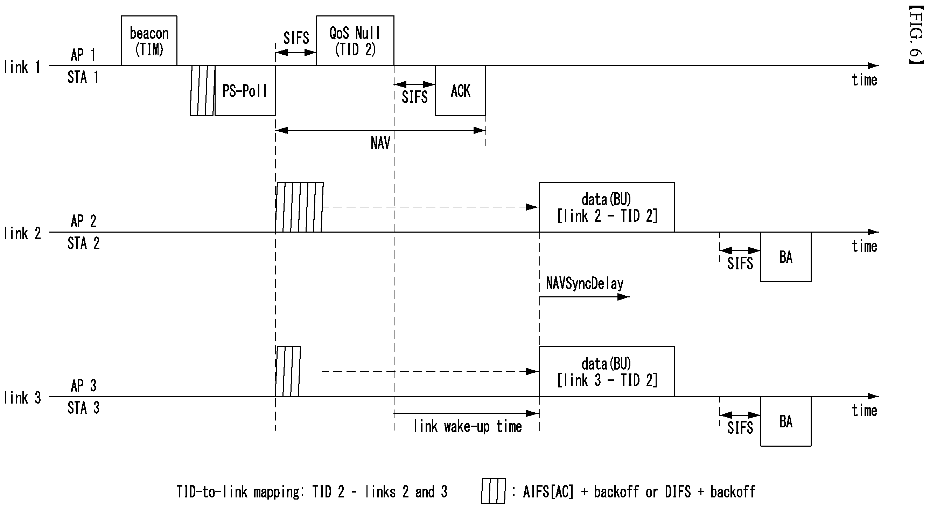

FIG. 6 is a timing diagram illustrating a first embodiment of a downlink communication method in a wireless LAN system supporting multiple links.

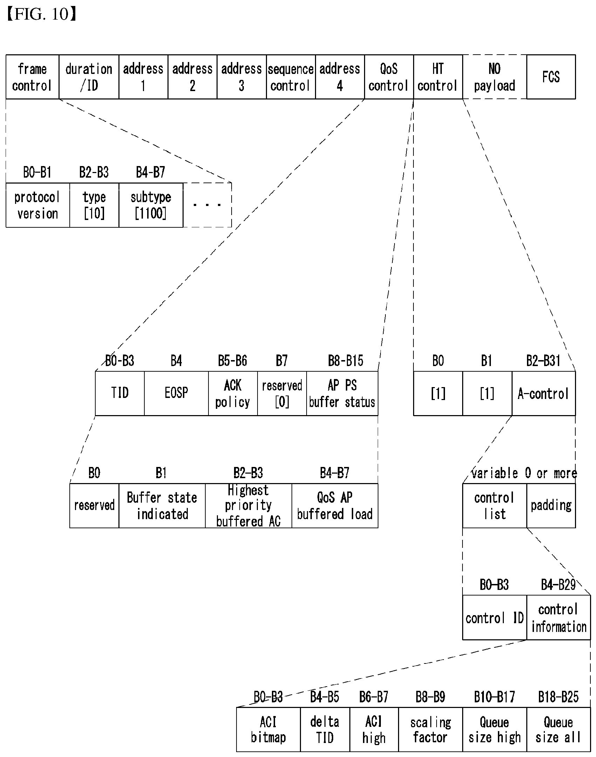

As shown in FIG. 6, an AP MLD may include an AP 1, AP 2, and AP 3, and a STA MLD may include a STA 1, STA 2, and STA 3. In other words, the AP 1, AP 2, and AP 3 may be affiliated with the AP MLD, and the STA 1, STA 2, and STA 3 may be affiliated with the STA MLD. Each of the AP 1 and the STA 1 may operate in a link 1, each of the AP 2 and the STA 2 may operate in a link 2, and each of the AP 3 and the STA 3 may operate in a link 3. The AP may inform the STA of a traffic identifier (TID) of a buffered unit (BU) of the AP by transmitting a QoS Null frame or a frame including the TID, and then transmit a data frame to the STA. The BU may refer to a data unit stored in the AP MLD (e.g., AP). The QoS Null frame shown in FIG. 6 may be a QoS Null frame shown in FIGS. 10 to 12 to be described below.

The STA MLD may perform a TID-to-link mapping procedure with the AP MLD. In the TID-to-link mapping procedure, a specific TID may be mapped to a specific link. One TID may be mapped to one or more links. For example, a TID 1 may be mapped to the link 1, and a TID 2 may be mapped to the link 2 and the link 3. In this case, a data frame (e.g., BU) having the TID 1 may be transmitted/received through the link 1, and a data frame having the TID 2 may be transmitted/received through the link 2 and the link 3. In the TID-to-link mapping procedure, available link(s) may be determined according to a specific TID.

The AP 1 of the AP MLD may transmit a beacon frame through the link 1. The STA 1 of the STA MLD may wake up according to a transmission periodicity (or reception periodicity) of the beacon frame in order to receive the beacon frame of the AP 1. The beacon frame may include a traffic indication map (TIM), and the TIM may indicate whether a BU to be transmitted to the STA MLD exists in the AP MLD. For example, when a specific bit included in the TIM is set to a first value (e.g., 1), this may indicate that a BU for a STA MLD having an association identifier (AID) corresponding to the specific bit exists in the AP MLD. The AID may be assigned for each MLD. Accordingly, a plurality of STAs included within the same STA MLD may have the same AID.

The STA 1 may receive the beacon frame from the AP 1 through the link 1, and may identify the TIM included in the beacon frame. When the TIM indicates that a BU to be transmitted to the STA 1 (e.g., STA MLD) exists in the AP 1 (e.g., AP MLD) (e.g., when a bit corresponding to the STA 1 (e.g., STA MLD) in the TIM is set to a first value (e.g., 1)), the STA 1 may transmit a power save (PS)-Poll frame through the link 1. The PS-Poll frame may include information on link(s) available for the STA MLD and/or information on a link wake-up time. The link wake-up time may be a time required for state transition of a link (e.g., STA operating in the link). The state transition may refer to transition from a low-power state, a sleep state, or a doze state to a normal state. The state transition may mean that a radio hardware of a radio terminal transitions from an operating frequency other than an operating frequency of the corresponding link to the operating frequency of the corresponding link. The normal state may mean a wake-up state. The normal state may mean that the radio hardware of the radio terminal operates at the operating frequency of the corresponding link. The expression 'a link is in the normal state' may mean that a STA operating in the link is in the normal state. When the link wake-up time is set to 0, states of all links may transition to the normal state after transmission of the PS-Poll frame, and frames may be transmitted and received through the links in the normal state.

A power saving level (PSL) of the STA MLD may be included in the PS-Poll frame. For example, a PSL having a size of 3 bits may indicate a level 0, 1, 2, or 3. The PSL 0 may mean a condition in which only a state of a current link can be transitioned to the normal state, the PSL 1 may mean a condition in which state(s) of link(s) corresponding to 50% of all links can be transitioned to the normal state, the PSL 2 may mean a condition in which state(s) of link(s) corresponding to 75% of all links can be transitioned to the normal state, and the PSL 3 may mean a condition in which stats of all links can be transitioned to the normal state. At the PSL 0, state(s) of link(s) other than a current link cannot be transitioned to the normal state. A link in the normal state may mean an available link.

Available link(s) according to a PSL (e.g., links operating in the normal state) may be determined in ascending order of link numbers. For example, when the STA MLD supports four links (e.g., link 0, link 1, link 2, and link 3), the link 0 is used for communication between the STA MLD and the AP MLD, and the PSL is 1, available links may be the links 0 and 1 corresponding to 50% of the four links. When the PSL is 2 in the above example, available links may be the links 0, 1, and 2 corresponding to 75% of the four links. When the PSL is 3 in the above example, all links may be available links. The number of available links may be determined as [number of all links × a ratio according to PSL] or based on [number of all links × a ratio according to PSL]. A function (e.g., ceiling function or floor function) used to determine the number of available links according to a PSL may be preconfigured by a negotiation procedure between the AP MLD and the STA MLD.

A value of a duration field included in a MAC header of the PS-Poll frame may be set differently according to a value of the link wake-up time included in the PS-Poll frame. When the link wake-up time is 0 and the PSL is 3, this may mean that all links are in a ready-to-use state (e.g., normal state). In this case, since the AP MLD is able to transmit an ACK frame after a SIFS from a time of receiving the PS-Poll frame, the duration field included in the MAC header of the PS-Poll frame may indicate (SIFS + time required for transmission of an ACK frame). When the link wake-up time is not 0 and the PSL is not 3, a time for the AP MLD to transmit the QoS Null frame including the TID may be required. In this case, the duration field included in the MAC header of the PS-Poll frame may indicate (SIFS + time required for transmission of the QoS Null frame + SIFS + time required for transmission of an ACK frame).

The AP MLD (e.g., AP 1) may receive the PS-Poll frame from the STA MLD (e.g., STA 1). The AP MLD may perform a channel access operation (e.g., channel sensing operation and/or backoff operation) for transmission of the BU through link(s) mapped to the TID of the BU from the time of receiving the PS-Poll frame. When the TID of the BU is 2, the AP MLDs (e.g., AP 2 and AP 3) may perform channel access operations in the links 2 and 3. When a result of the channel sensing operation on a link indicates an idle state and/or when the backoff operation on the link is successful, the AP MLD may wait for transmission until the STA MLD becomes able to receive a frame through the corresponding link. When the STA MLD becomes able to receive a frame, the AP MLD may transmit a data frame including the BU through the corresponding link. When there is a link in a busy state at a time of transmitting the BU, the AP MLD may not transmit the data frame including the BU through the link in the busy state, and may use only a link in the idle state to transmit the data frame including the BU frame.

The AP MLD receiving the PS-Poll frame may identify the TID of the BU to be transmitted to the STA MLD transmitting the PS-Poll frame, and identify link(s) mapped to the TID of the BU (e.g., the links 2 and 3 mapped to the TID 2) based on the TID-to-link mapping. When the link wake-up time included in the PS-Poll frame is 0 and the PSL included in the PS-Poll frame is 3, transmission of the BU may be possible in all the links. Accordingly, the AP MLD (e.g., AP 1) may transmit an ACK frame after a SIFS from the time of receiving the PS-Poll frame, and transmit the data frame including the BU through link(s) (e.g., links 2 and 3) mapped to the TID of the BU after transmission of the ACK frame.

On the other hand, when the BU cannot be immediately transmitted through the link(s) mapped to the TID of the BU, the AP MLD (e.g., AP 1) may transmit a response frame (e.g., QoS Null frame) including the TID after a SIFS from the time of receiving the PS-Poll frame. The QoS Null frame may be used to inform the TID (e.g., TID 2) of the BU stored in the AP MLD. The STA MLD (e.g., STA 1) may receive the response frame, identify the TID (e.g., TID 2) included in the response frame, and identify the link(s) (e.g., links 2 and 3) mapped to the TID. The STA MLD may transition the state(s) of the link(s) mapped to the TID to the normal state in order to receive the BU.

A link state transition time may be less than or equal to the link wake-up time. For example, the link state transition time may be within a NAVSyncDelay. The NAVSyncDelay may be preset between the AP MLD and the STA MLD. For example, the AP MLD may set the NAVSyncDelay in consideration of the link state transition time of the STA MLD and inform the STA MLD of the NAVSyncDelay. The AP MLD (e.g., AP 2 and AP 3) may transmit the data frame including the BU after the link wake-up time from a time of transmitting the response frame. Even when the channel sensing operation and/or backoff operation have already been completed in the AP MLD, the AP MLD may transmit the BU at least after the link wake-up time. The link wake-up time may start from the time (e.g., transmission start time or transmission end time) of transmitting the QoS Null frame including the TID.

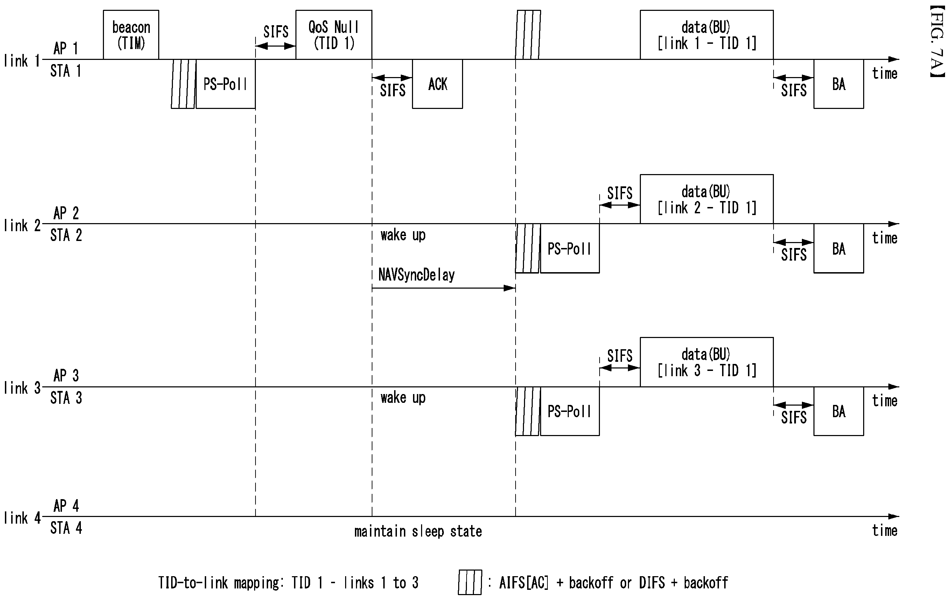

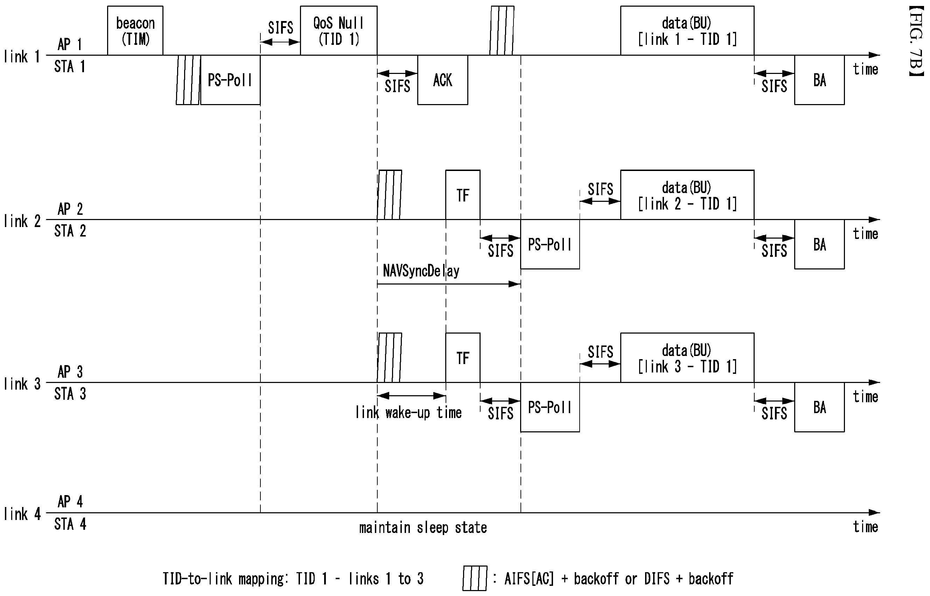

FIG. 7A is a timing diagram illustrating a second embodiment of a downlink communication method in a wireless LAN system supporting multiple links, and FIG. 7B is a timing diagram illustrating a third embodiment of a downlink communication method in a wireless LAN system supporting multiple links.

As shown in FIGS. 7A and 7B, an AP MLD may include an AP 1, AP 2, AP 3, and AP4, and a STA MLD may include a STA 1, STA 2, STA 3, and STA 4. In other words, the AP 1, AP 2, AP 3, and AP4 may be affiliated with the AP MLD, and the STA 1, STA 2, STA 3, and STA 4 may be affiliated with the STA MLD. Each of the AP 1 and the STA 1 may operate in a link 1, each of the AP 2 and the STA 2 may operate in a link 2, each of the AP 3 and the STA 3 may operate in a link 3, and each of the AP 4 and the STA 4 may operate in a link 4. The AP may inform the STA of a TID of a BU of the AP by transmitting a QoS Null frame or a frame including the TID, and then transmit a data frame to the STA. The QoS Null frame shown in FIGS. 7A and 7B may be a QoS Null frame shown in FIGS. 10 to 12 to be described below.

The STA MLD may perform a TID-to-link mapping procedure with the AP MLD. In the TID-to-link mapping procedure, a specific TID may be mapped to a specific link. One TID may be mapped to one or more links. For example, a TID 1 may be mapped to the link 1, link 2, and link 3, and a TID 2 may be mapped to the link 4. In this case, a data frame having the TID 1 may be transmitted/received through the links 1, 2, and 3, and a data frame having the TID 2 may be transmitted/received through the link 4. In the TID-to-link mapping procedure, available link(s) may be determined according to a specific TID.

The AP 1 of the AP MLD may transmit a beacon frame through the link 1. The STA 1 of the STA MLD may wake up according to a transmission periodicity (or reception periodicity) of the beacon frame in order to receive the beacon frame of the AP 1. The beacon frame may include a TIM, and the TIM may indicate whether a BU to be transmitted to the STA MLD exists in the AP MLD.

The STA 1 may receive the beacon frame from the AP 1 through the link 1, and may identify the TIM included in the beacon frame. When the TIM indicates that a BU to be transmitted to the STA 1 (e.g., STA MLD) exists in the AP 1 (e.g., AP MLD), the STA 1 may transmit a PS-Poll frame through the link 1. The PS-Poll frame may include information on link(s) available for the STA MLD, information on a link wake-up time, and/or information on a PSL.

The AP MLD may receive the PS-Poll frame from the STA MLD. In this case, the AP MLD may identify the TID (e.g., TID 1) of the BU, and identify link(s) (e.g., link 1, link 2, and link 3) mapped to the TID according to the TID-to-link mapping. A duration field included in a MAC header of the PS-Poll frame may indicate (SIFS + time required for transmission of the QoS Null framer + SIFS + time required for transmission of an ACK frame). When transmission of the BU is possible using only the link (e.g., link 1) in which the PS-Poll frame is received, the AP MLD may transmit an ACK frame after a SIFS from a time of receiving the PS-Poll frame. In this case, the duration field included in the ACK frame may indicate up to a time of transmitting the current ACK frame, and accordingly, a transmit opportunity (TXOP) may be terminated early.

When the BU is transmitted using links (e.g. link 2 and link 3) other than the link in which the PS-Poll frame is received or when the BU is transmitted using links (e.g., link 1, link 2, and link 3) including the link in which the PS-Poll frame is received, the AP MLD (e.g., AP 1) may transmit a response frame (e.g., QoS Null frame) including the TID without a separate contention procedure after a SIFS from a time of receiving the PS-Poll frame. In this case, the duration field included in the MAC header of the PS-Poll frame may indicate (SIFS + time required for transmission of the QoS Null frame + SIFS + time required for transmission of an ACK frame). The response frame including information indicating the link(s) through which the BU is to be transmitted may be a broadcast frame or a unicast frame. The information indicating the link(s) through which the BU is to be transmitted may be referred to as a link indicator. The information indicating the link(s) through which the BU is to be transmitted may be a TID mapped to the link(s).

The STA MLD may receive the QoS Null frame (e.g., broadcast frame or unicast frame) including the TID (e.g., TID 1 or information on link(s) mapped to the TID 1) from the AP MLD, and may transition state(s) of the link(s) (e.g., link 1, link 2, and link 3) mapped to the TID to the normal state in order to receive the BU. Since the TID 1 indicated by the AP MLD is mapped to the link 1, link 2, and link 3, the STA MLD may transition the states of the link 2 and link 3 to the normal state. The state of the link 4 may remain in the sleep state. The link wake-up time may be required for the state of the link to transition from the sleep state to the normal state.

In the embodiment shown in FIG. 7A, the STA MLD (e.g., STA 2 and STA 3) may transmit the PS-Poll frame after performing channel access operations on the links 2 and 3 mapped to the TID. In this case, since each of the link 2 and the link 3 has been transitioned from the sleep state to the normal state, a transmission collision due to a hidden node may occur in each of the link 2 and the link 3. In order to prevent the above-described problem, a NAVSyncDelay timer may operate in each of the link 2 and link 3. The STA MLD may not transmit a frame during a time corresponding to the NAVSyncDelay timer. The time corresponding to the NAVSyncDelay timer may be quite a long time. After the time corresponding to the NAVSyncDelay timer, the STA 2 may transmit the PS-Poll frame through the link 2 in the case of successfully completing the channel access operation, and the STA 3 may transmit the PS-Poll frame through the link 3 in the case of successfully completing the channel access operation.

The PS-Poll frames (or frames serving as the PS-Poll frame) may be transmitted at the same time through a plurality of links based on a simultaneous transmission scheme. Alternatively, the PS-Poll frames (or frames serving as the PS-Poll frame) may be transmitted at different times in the respective plurality of links. In other words, the PS-Poll frame may be transmitted when the channel access operation is successful in each link, without considering other links.

The AP 2 may receive the PS-Poll frame from the STA 2, and may transmit a data frame including the BU to the STA 2 without a separate contention procedure after a SIFS from a time of receiving the PS-Poll frame. The AP 3 may receive the PS-Poll frame from the STA 3, and may transmit a data frame including the BU to the STA 3 without a separate contention procedure after a SIFS from a time of receiving the PS-Poll frame. To support the above-described operations, the duration field included in the MAC header of the PS-Poll frame may indicate (SIFS + time required for transmission of the data frame + SIFS + time required for transmission of a BA frame (or ACK frame)).

Meanwhile, the QoS Null frame may include a link use state indicator of each link. When the QoS Null frame includes the link use state indicator, the STA may not wait for the time corresponding to the NAVSyncDelay timer. When the link use state indicator is set to a first value (e.g., 0), a STA operating in a link associated with the link use state indicator may perform a channel access operation immediately when a result of a channel sensing operation indicates the idle state, and may immediately transmit the PS-Poll frame when a result of the channel access operation indicates that the channel is in the idle state during an AIFS or DIFS. When the link use state indicator is set to a second value (e.g., 1), the result of the channel sensing operation indicates a busy state, and a MAC header of a frame detected by the channel sensing operation is decoded, the STA operating in the link associated with the link use state indicator may wait until a time indicated by a duration field of the MAC header. When the link use state indicator is set to the second value (e.g., 1), the result of the channel sensing operation indicates a busy state, and decoding of the MAC header of the frame detected by the channel sensing operation fails, the STA operating in the link associated with the link use state indicator may perform a channel access operation after an EIFS from an end time of the busy state.

In the embodiment shown in FIG. 7B, in order to reduce a channel access latency (e.g., the time corresponding to the NAVSyncDelay timer), the AP(s) in charge of the link(s) mapped to the TID may transmit a trigger frame (TF) for triggering a PS-Poll frame for identifying whether communication preparation has been completed in the STA(s). The TF may be transmitted through the link(s) indicated by the QoS Null frame. For example, the AP 2 may transmit the TF through the link 2 and the AP 3 may transmit the TF through the link 3. Each of the AP 2 and the AP 3 may operate in the link in the normal state and perform a channel sensing operation. Accordingly, each of the AP 2 and the AP 3 may immediately perform a channel access operation without waiting for the NAVSyncDelay. When the TF needs to be transmitted, each of the AP 2 and the AP 3 may perform a channel access operation (e.g., channel sensing operation and/or backoff operation) in advance, and when the channel access operation is successfully completed, each of the AP 2 and the AP 3 may wait until a time of transmitting the TF.

Each of the AP 2 and the AP 3 may transmit the TF after a time (e.g., link wake-up time) when a link state is expected to transition to the normal state. Each of the STA 2 and the STA 3 may receive the TF and then transmit a PS-Poll frame. The AP 2 may receive the PS-Poll frame through the link 2, and may transmit a data frame including a BU to the STA 2 after a SIFS from a time of receiving the PS-Poll frame. The AP 3 may receive the PS-Poll frame through the link 3, and may transmit a data frame including a BU to the STA 3 after a SIFS from a time of receiving the PS-Poll frame.

The STA(s) of the STA MLD may not be able to use a specific link(s) due to a problem such as a hidden node. Therefore, the STA(s) may not be able to transmit the PS-Poll frame(s) through the specific link(s). In this case, the AP MLD may transmit the data frame including the BU only through the link(s) in which the PS-Poll frame is received.

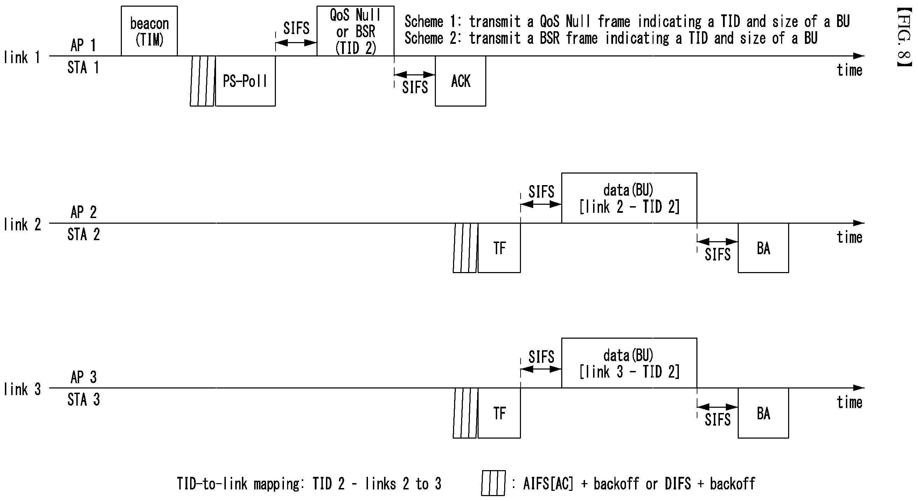

FIG. 8 is a timing diagram illustrating a fourth embodiment of a downlink communication method in a wireless LAN system supporting multiple links.

As shown in FIG. 8, an AP MLD may include an AP 1, AP 2, and AP 3, and a STA MLD may include a STA 1, STA 2, and STA 3. In other words, the AP 1, AP 2, and AP 3 may be affiliated with the AP MLD, and the STA 1, STA 2, and STA 3 may be affiliated with the STA MLD. Each of the AP 1 and the STA 1 may operate in a link 1, each of the AP 2 and the STA 2 may operate in a link 2, and each of the AP 3 and the STA 3 may operate in a link 3. The AP may inform the STA of a TID and/or a size of a BU of the AP by transmitting a QoS Null frame, and then transmit a data frame to the STA based on a trigger frame (TF). The QoS Null frame shown in FIG. 8 may be a QoS Null frame shown in FIGS. 10 to 12 to be described below. A buffer status report (BSR) frame shown in FIG. 8 may be a BSR frame shown in FIG. 10 to be described below.

The STA MLD may perform a TID-to-link mapping procedure with the AP MLD. In the TID-to-link mapping procedure, a specific TID may be mapped to a specific link. One TID may be mapped to one or more links. For example, a TID 1 may be mapped to the link 1, and a TID 2 may be mapped to the link 2 and the link 3. In this case, a data frame having the TID 1 may be transmitted/received through the link 1, and a data frame having the TID 2 may be transmitted/received through the link 2 and the link 3.

The AP 1 of the AP MLD may transmit a beacon frame through the link 1. The STA 1 of the STA MLD may wake up according to a transmission periodicity (or reception periodicity) of the beacon frame in order to receive the beacon frame of the AP 1. The beacon frame may include a TIM, and the TIM may indicate whether a BU to be transmitted to the STA MLD exists in the AP MLD. The STA 1 may receive the beacon frame from the AP 1 through the link 1, and may identify the TIM included in the beacon frame. When the TIM indicates that a BU to be transmitted to the STA 1 (e.g., STA MLD) exists in the AP 1 (e.g., AP MLD), the STA 1 may transmit a PS-Poll frame through the link 1. The PS-Poll frame may include information on link(s) available for the STA MLD, information on a link wake-up time, and/or information on a PSL.

The AP MLD may receive the PS-Poll frame from the STA MLD. In this case, the AP MLD may identify the TID (e.g., TID 2) of the BU, and may identify link(s) (e.g., link 2 and link 3) mapped to the TID according to the TID-to-link mapping. When transmission of the BU is possible using only the link (e.g., link 1) in which the PS-Poll frame is received, the AP MLD (e.g., AP 1) may transmit an ACK frame after a SIFS from a time of receiving the PS-Poll frame. When transmission of the BU is impossible using only the link (e.g., link 1) in which the PS-Poll frame is received, the AP 1 may transmit a response frame (e.g., QoS Null frame) including the TID without performing a separate contention procedure after a SIFS from the time of receiving the PS-Poll frame.

In addition, the QoS Null frame may include information indicating the size (e.g., length) of the BU. The size of the BU may be indicated in one of two schemes. As the first scheme (Scheme 1), a queue size field in a QoS control field included in a MAC header of the QoS Null frame may be set to indicate the size of the BU. As the second scheme (Scheme 2), a BSR frame indicating the size of the BU may be used instead of the QoS Null frame. In other words, a BSR frame including a header of a QoS frame (e.g., QoS Null frame) may be generated.

When Scheme 1 described above is used, the QoS Null frame may indicate the TID and the size of the BU stored in the AP MLD. Instead of the QoS Null frame, another frame including information on the TID and the size (e.g., queue size information) of the BU may be used. When Scheme 2 described above is used, the BSR frame having a QoS MAC header may indicate the TID and the size of the BU stored in the AP MLD.

The STA MLD (e.g., STA 1) may receive the QoS Null frame or BSR frame including the information on the TID and the size of the BU from the AP MLD (e.g., AP 1). The STA MLD may identify link(s) (e.g., links 2 and 3) mapped to the TID based on the TID-to-link mapping. For example, the STA MLD may determine that the BU of the AP MLD are to be transmitted through the links 2 and 3. In addition, the STA MLD may identify the size of the BU based on the queue size information included in the QoS Null frame or a BSR included in the BSR frame.

The STA MLD may transition the state(s) of the link(s) (e.g., links 2 and 3) mapped to the TID of the BU to the normal state. When the link(s) are in the normal state (e.g., when data frame reception is possible in the link(s)), each of the STA 2 and the STA 3 may transmit a TF. The AP 2 may receive the TF from the STA 2 through the link 2, and may transmit a data frame including the BU to the STA 2 after a SIFS from a time of receiving the TF. The STA 2 may receive the data frame from the AP 2. The AP 3 may receive the TF from the STA 3 through the link 3, and may transmit a data frame including the BU to the STA 3 after a SIFS from a time of receiving the TF. The STA 3 may receive the data frame from the AP 3.

Here, a TXOP may be configured by the TF. The length of the TXOP may be configured in consideration of the size of the BU and/or the number of links through which the BU is to be transmitted. For example, the length of the TXOP may be configured to be (SIFS + time required for transmission of the BU through multiple links + SIFS + time required for transmission of an ACK frame (or BA frame)). The time required for transmission of the data frame (e.g., BU) allocated by the TF may be configured in consideration of the size of the BU.

Each of the QoS Null frame and the BSR frame may include a link use state indicator of each link. The link use state indicator may indicate whether a link is occupied by another communication node. For example, when the link use state indicator indicates that the link 2 is in the idle state, the STA 2 may perform a channel access operation for transmission of the TF without waiting for the NAVSyncDelay. When a result of the channel sensing operation on the link 2 indicates a busy state, the TF cannot be transmitted through the link 2. In this case, if the TF is transmitted only through the link 3, the BU may be transmitted using only the link 3. In the link 3, the TXOP may be configured considering the size of the BU and/or the number (e.g., 1) of available links.

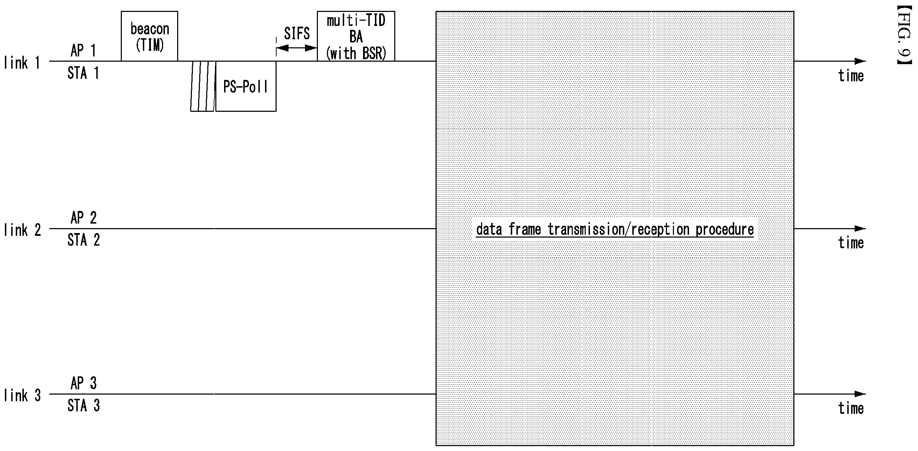

FIG. 9 is a timing diagram illustrating a fifth embodiment of a downlink communication method in a wireless LAN system supporting multiple links.

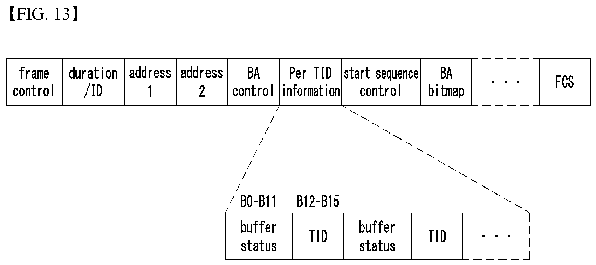

As shown in FIG. 9, an AP MLD may include an AP 1, AP 2, and AP 3, and a STA MLD may include a STA 1, STA 2, and STA 3. In other words, the AP 1, AP 2, and AP 3 may be affiliated with the AP MLD, and the STA 1, STA 2, and STA 3 may be affiliated with the STA MLD. Each of the AP 1 and the STA 1 may operate in a link 1, each of the AP 2 and the STA 2 may operate in a link 2, and each of the AP 3 and the STA 3 may operate in a link 3. The AP may inform the STA of a TID and a size of each of a plurality of BUs using a multi-TID BA frame. The multi-TID BA frame may be a multi-TID BA frame shown in FIG. 13 to be described below.

The AP MLD (e.g., AP 1) may have a plurality of BUs for one STA MLD. TIDs of the plurality of BUs may be different from each other. When a PS-Poll frame is received from the STA MLD (e.g., STA 1), the AP MLD may transmit a specific frame indicating the TID of each of the plurality of BUs stored in the AP MLD to the STA MLD. The specific frame may be a multi-TID BA frame, a modified QoS Null frame, an aggregated (A)-MAC protocol data unit (MPDU) including a QoS Null MPDU, or a frame capable of indicating TID(s). The specific frame may serve as a response frame indicating that the PS-Poll frame has been successfully received.

The STA MLD may receive the specific frame from the AP MLD, and may transition states of links mapped to the plurality of TIDs indicated by the specific frame to the normal state. In the links operating in the normal state, data frame (e.g., BU) transmission and reception procedures between the STAs and the APs may be performed. The data frame transmission and reception procedures may include a transmission operation of a PS-Poll frame of the STA, transmission operation of a data frame including the BU of the AP, and transmission operation of an ACK frame or BA frame of the STA.

FIG. 10 is a block diagram illustrating a first embodiment of a QoS Null frame or BSR frame.

As shown in FIG. 10, a QoS Null frame may include a BSR. The frame shown in FIG. 10 may be the QoS Null frame or BSR frame shown in FIG. 8. An AP PS buffer status field within a QoS control field included in a MAC header of the QoS Null frame may indicate a buffer status (e.g., BSR) of the AP MLD. Alternatively, a BSR control message included in an HT control field of the QoS Null frame may indicate the buffer status (e.g., BSR) of the AP MLD. In addition, the QoS Null frame may include information on TID(s) of BU(s) stored in the AP MLD. When a PS-Poll frame is received from the STA MLD, the AP MLD may transmit a QoS Null frame including information on the TID and the size (e.g., buffer information) of the BU stored in the AP MLD.

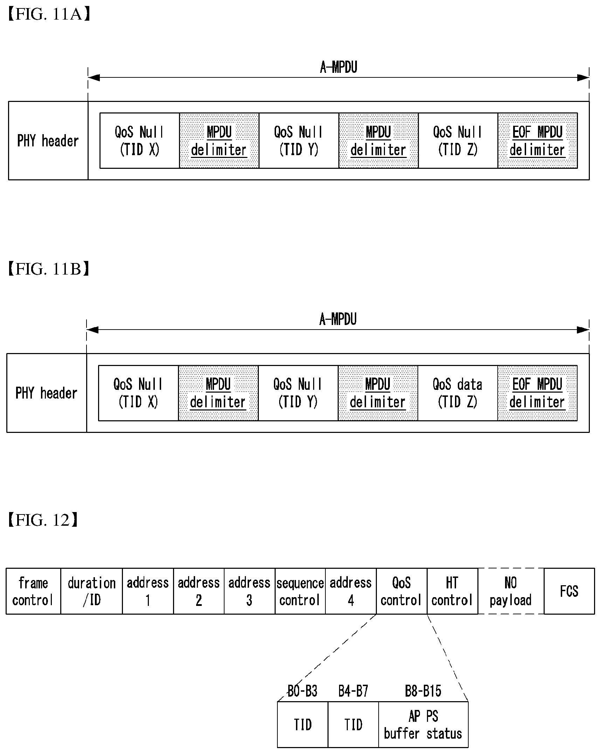

FIG. 11A is a block diagram illustrating a first embodiment of an A-MPDU including a QoS Null MPDU, and FIG. 11B is a block diagram illustrating a second embodiment of an A-MPDU including a QoS Null MPDU.

As shown in FIGS. 11A and 11B, the AP MLD may generate an A-MPDU by concatenating QoS Null MPDUs using MPDU delimiters to transmit information on a TID and a size (e.g., buffer information) of each of a plurality of BUs. In the embodiment shown in FIG. 11A, the A-MPDU may include only QoS Null MPDUs. In the embodiment shown in FIG. 11B, the A-MPDU may include the QoS Null MPDU, data unit(s), and/or multi-TID BA.

The AP MLD may transmit the A-MPDU including the QoS Null MPDU(s) to the STA MLD in response to the PS-Poll frame. The STA MLD may receive the A-MPDU from the AP MLD, and transition state(s) of link(s) mapped to the TID(s) indicated by the QoS Null MPDU(s) included in the A-MPDU to the normal state. In the link(s) operating in the normal state, a data frame (e.g., BU) transmission and reception procedure between the STA MLD and the AP MLD may be performed. The data frame transmission and reception procedure may include a transmission operation of a PS-Poll frame of the STA through each link, transmission operation of a data frame including the BU of the AP through each link, and transmission operation of an ACK frame or BA frame of the STA through each link.

FIG. 12 is a block diagram illustrating a first embodiment of a QoS Null frame including a plurality of TIDs.

As shown in FIG. 12, a QoS Control field of a QoS Null frame may include a plurality of TID fields. Within the QoS control field, B0 to B3 may be configured as a first TID field, and B4 to B7 may be configured as second TID field. When the QoS Null frame is received from the AP MLD in response to the PS-Poll frame, the STA MLD may consider the QoS Null frame as indicating a plurality of TIDs (e.g., two TIDs). The STA MLD may transition states of links mapped to the plurality of TIDs to the normal state and may receive the data frame including the BU from the AP MLD. In other words, in the links operating in the normal state, a data frame (e.g., BU) transmission and reception procedure between the STA MLD and the AP MLD may be performed. The data frame transmission and reception procedure may include a transmission operation of a PS-Poll frame of the STA through each link, transmission operation of a data frame including the BU of the AP through each link, and transmission operation of an ACK frame or BA frame of the STA through each link.

FIG. 13 is a block diagram illustrating a first embodiment of a multi-TID BA frame.

As shown in FIG. 13, the AP MLD may use a multi-TID BA frame to inform the STA MLD of information on a plurality of TIDs. A per-TID information field of the multi-TID BA frame may be configured to indicate information of the plurality of TIDs. In the existing per-TID information field, B0 to B11 are configured as a reserved field, but in the per-TID information field shown in FIG. 13, B0 to B11 may be used to indicate buffer information for each TID (e.g., size of a BU associated with the TID). In other words, in the per-TID information field, a buffer status field may indicate buffer information for each TID.

The AP MLD may inform the STA MLD of information on a TID and/or buffer according to the TID-to-link mapping by transmitting a multi-TID BA frame to the STA MLD in response to a PS-Poll frame. The STA MLD may receive the multi-TID BA frame from the AP MLD and may identify the plurality of TIDs indicated by the multi-TID BA frame. The STA MLD may transition states of links mapped to the plurality of TIDs and may receive a data frame including the BU from the AP MLD. In other words, in the links operating in the normal state, a data frame (e.g., BU) transmission and reception procedure between the STA MLD and the AP MLD may be performed. The data frame transmission and reception procedure may include a transmission operation of a PS-Poll frame of the STA through each link, transmission operation of a data frame including the BU of the AP through each link, and transmission operation of an ACK frame or BA frame of the STA through each link.

The embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first device supporting multiple links in a communication system, the operation method comprising:
transmitting a traffic indication map (TIM) through a first link among the multiple links;
transmitting first information through the first link, the first information indicating one or more links through which a data unit stored in the first device is transmitted; and
transmitting the data unit to a second device indicated by the TIM using the one or more links indicated by the first information.

2. The operation method according to claim 1, wherein the first information includes a traffic identifier (TID) mapped to the one or more links.

3. The operation method according to claim 1, further comprising: receiving a power saving (PS)-Poll frame from the second device through the one or more links indicated by the first information, wherein the data unit is transmitted when the PS-Poll frame is received from the second device.

4. The operation method according to claim 3, wherein the PS-Poll frame is received after a first time from a time of transmitting the first information, and the first time is set to prevent collision between frames.

5. The operation method according to claim 4, wherein the first time is set to a time longer than a time required for link state transition in the second device.

6. The operation method according to claim 1, further comprising:
transmitting a trigger frame to the second device through the one or more links indicated by the first information; and
receiving a PS-Poll frame as a response to the trigger frame from the second device,
wherein the data unit is transmitted when the PS-Poll frame is received from the second device.

7. The operation method according to claim 1, wherein the TIM is transmitted through a beacon frame, and the first information is transmitted through a broadcast frame or a unicast frame.

8. An operation method of a second device supporting multiple links in a communication system, the operation method comprising:
receiving a traffic indication map (TIM) from a first device through a first link among the multiple links;
receiving first information from the first device through the first link, the first information indicating one or more links through which a data unit stored in the first device is transmitted; and
in response to the TIM indicating that the data unit to be transmitted to the second device exists, receiving the data unit from the first device through the one or more links indicated by the first information.

9. The operation method according to claim 8, wherein the first information includes a traffic identifier (TID) mapped to the one or more links.

10. The operation method according to claim 8, further comprising: transmitting a power saving (PS)-Poll frame to the first device through the one or more links indicated by the first information, wherein the data unit is received after transmitting the PS-Poll frame.

11. The operation method according to claim 10, wherein the PS-Poll frame is transmitted after a first time from a time of receiving the first information, and the first time is set to prevent collision between frames.

12. The operation method according to claim 11, wherein the first time is set to a time longer than a time required for link state transition in the second device.

13. The operation method according to claim 8, further comprising:
receiving a trigger frame from the first device through the one or more links indicated by the first information; and
transmitting a PS-Poll frame as a response to the trigger frame to the first device,
wherein the data unit is received after transmitting the PS-Poll frame.

14. The operation method according to claim 8, wherein the TIM is received through a beacon frame, and the first information is received through a broadcast frame or a unicast frame.

15. A station (STA) multi-link device (MLD) supporting multiple links in a communication system, comprising:
a processor;
a first STA operating under control of the processor;
a second STA operating under control of the processor; and
a memory storing one or more instructions executable by the processor,
wherein the one or more instructions are executed to:
receive, by the first STA, a traffic indication map (TIM) from an access point (AP) MLD through a first link among the multiple links;
receive, by the first STA, first information from the AP MLD, the first information indicating a second link through which a data unit stored in the AP MLD is transmitted; and
in response to the TIM indicating that the data unit to be transmitted to the STA MLD exists, receive, by the second STA, the data unit from the AP MLD through the second link indicated by the first information among the multiple links.

16. The STA MLD according to claim 15, wherein the first information includes a traffic identifier (TID) mapped to the second link.

17. The STA MLD according to claim 15, wherein the one or more instructions are further executed to: transmit, by the second STA, a power saving (PS)-Poll frame to the AP MLD through the second link indicated by the first information, wherein the data unit is received after transmitting the PS-Poll frame.

18. The STA MLD according to claim 17, wherein the PS-Poll frame is transmitted after a first time from a time of receiving the first information, and the first time is set to prevent collision between frames.

19. The STA MLD according to claim 15, wherein the one or more instructions are further executed to:
receive, by the second STA, a trigger frame from the AP MLD through the second link indicated by the first information; and
transmit, by the second STA, a PS-Poll frame as a response to the trigger frame to the AP MLD,
wherein the data unit is received after transmitting the PS-Poll frame.

20. The STA MLD according to claim 15, wherein the TIM is received through a beacon frame, and the first information is received through a broadcast frame or a unicast frame.
